# EUROPÄISCHE PATENTSCHRIFT

(11) **EP 0 565 150 B1**
(45) Veröffentlichungstag und Bekanntmachung des Hinweises auf die Patenterteilung: **02.06.1999**
(21) Anmeldenummer: 93200650.5
(22) Anmeldetag: 08.03.1993
(51) Int. Cl.: H04Q 7/20, H04M 1/66, H04M 1/57, H04M 3/38

(54) **Funknetz aus schnurlosen Telefonen**
Wireless/cordless telephone network
Réseau formé de téléphones sans fil

(30) Priorität: 11.03.1992 DE 4207748
(43) Veröffentlichungstag der Anmeldung: 13.10.1993
(73) Patentinhaber: Philips Patentverwaltung GmbH, 22335 Hamburg (DE); Koninklijke Philips Electronics N.V., 5621 BA Eindhoven (NL)
(72) Erfinder: Höflinger, Jürgen, c/o Philips Patentverwaltung, W-2000 Hamburg 1 (DE)
(74) Vertreter: Volmer, Georg, Dipl.-Ing.

(56) Entgegenhaltungen:
- EP-A- 0 293 014
- EP-A- 0 444 479
- US-A- 5 142 534

## Beschreibung

Die Erfindung betrifft ein aus schnurlosen Telefonen gebildetes Funknetz, bei dem Basisstationen schnurloser Telefone zum Anschluß an eine Vermittlungsanlage vorgesehen sind.

Schnurlose Telefone sind im Gegensatz zu Mobilfunkgeräten mit relativ geringem technischen Aufwand realisierbar. Sie lassen sich mit ihnen zugeordneten Basisstationen wie herkömmliche Telefonapparate beispielsweise an eine Nebenstellenvermittlungsanlage anschließen. Die Reichweite solcher schnurlosen Telefone ist jedoch in einigen europäischen Ländern aus Gründen der Frequenzökonomie durch eine geringe Sendeleistung je nach Funkumfeld auf 50 m bis 300 m begrenzt. Bei größeren Gebäudekomplexen, z.B. Firmengrundstücken und dergleichen, kann es daher vorkommen, daß der Fernsprechteilnehmer eines schnurlosen Telefons sich noch innerhalb des Gebäudekomplexes oder Firmengrundstückes bewegt, aber dennoch nicht mehr über sein schnurloses Telefon erreichbar ist.

Aus EP 0 293 014 ist ein aus schnurlosen Telefonen gebildetes Funknetz bekannt, bei dem Anschlußgeräte von schnurlosen Telefonen in Gruppen zusammengefaßt sind und auf diese Weise eine Funkzelle bilden. Es sind mehrere Funkzellen vorgesehen, wobei die Anschlußgeräte aller Funkzellen an einer gemeinsamen Steuereinrichtung angeschlossen sind. Die Anschlußgeräte und die den Anschlußgeräten zugeordneten schnurlose Telefone tauschen Daten aus, so daß in der Steuereinrichtung eine Positionstabelle geführt werden kann, aus der hervorgeht, in welcher Funkzelle sich ein bestimmtes schnurloses Telefon gerade befindet. Bei einem ankommenden Ruf für ein bestimmtes schnurloses Telefon wird anhand der Positionstabelle eine bestimmte Funkzelle ausgewählt, um den gewünschten Teilnehmer in dieser Funkzelle zu rufen.

Die bekannten Funknetze mit schnurlosen Telefonen setzen somit einen nicht unbeträchtlichen Aufwand an Steuereinrichtungen und Softwareaufwand für Verwaltung von mit schnurlosen Telefonen ausgerüsteten Teilnehmern voraus.

Aus EP 0 444 479 A2 ist ein Mehrwertdienst für ein Nachrichtenübertragungssystem mit drahtgebundenen Kanälen und/oder Funkkanälen bekannt, bei welchem eine Übertragung von durch einen Mehrwertdienstbetreiber eingegebenen Nachrichten zu beweglichen Funkempfängern erfolgt. Als Beispiel für einen solchen Mehrwertdienst wird in der Einleitung dieser Anmeldung der City-Ruf Dienst beschrieben, dessen Funkrufnetz aus Funkrufvermittlungsstellen, Funkkonzentratoren, Sendern und Funkrufempfängern besteht. Die Funkvermittlungsstelle verwaltet die Teilnehmerdaten und steuert die Sender, über welche ein Ruf ausgestrahlt wird.Eine aus dem öffentlichen, drahtgebundenen Telekommunikationsnetz an der Funkvermittlungsstelle ankommende Rufausstrahlungsanforderung enthält die Teilnehmernummer des gewünschten Funkrufteilnehmers und die an ihn gerichtete Nachricht. Die Funkrufvermittlungsstelle setzt die gewählte Teilnehmernummer in ein entsprechendes Codewort um und wählt zur Nachrichtenübermittlung eine entsprechende Rufzone sowie eine Sendefrequenz aus. Der an einen jewiligen Funkrufempfänger gesendete Ruf enthält die jedem Funkrufempfänger zugeordnete individuelle Adresse und die an ihn gerichtete Nachricht.

Wie sich schon aus dieser Beschreibung ergibt, ist der Aufbau eines solchen Systems mit Funkrufvermittlungsstelle, Funkkonzentrator und Sendern relativ komplex.

Aufgabe der vorliegenden Erfindung ist, ein aus schnurlosen Telefonen gebildetes Netz anzugeben, bei dem der Aufwand hierzu so gering wie möglich ist.

Diese Aufgabe wird bei einem aus schnurlosen Telefonen gebildeten Funknetz dadurch gelöst, daß im Rufnummernplan der Vermittlungsanlage die Aufnahme eines Merkmals "schnurloses Telefon" und einer, einem schnurlosen Telefon zuordenbaren Kennung vorgesehen ist, und daß die Vermittlungsanlage dazu vorgesehen ist, beim Rufen eines Teilnehmers mit dem Merkmal "schnurloses Telefon", die diesem Teilnehmer im Rufnummernplan zugeordnete Kennung an eine Vielzahl von Teilnehmern (Rundruf) auszusenden und daß die Basisstation mit einer Schnittstelle versehen ist, die dazu vorgesehen ist, bei bestimmten, leitungsseitig ankommenden Rufsignalen eine darin enthaltene Kennung zu entnehmen und für den Kennungsaustausch zwischen der Basisstation und dem schnurlosen Telefon (M1) zu verwenden.

Durch die Abgabe eines Rundrufes an eine Vielzahl, sofern sich die Anzahl der in Frage kommenden Fernsprechteilnehmer nicht einschränken läßt, eben an alle angeschlossenen Teilnehmer, ist sichergestellt, daß der Rundruf alle Basisstationen erreicht. Alle, bzw. alle nicht bereits ein Gespräch abwickelnde Basisstationen senden die im Rundruf enthaltene Kennung quasi als Selektivruf aus. Auf diese Weise kann ein bestimmter Fernsprechteilnehmer eines schnurlosen Telefons, sofern er sich im Reichweitenbereich irgendeiner, der die Kennung ausstrahlenden Basisstationen aufhält, sicher aufgefunden werden.

Die Basisstationen sind so ausgebildet, daß sie über die zwischen Vermittlungsanlage und Basisstation liegende Schnittstelle empfangene Rundrufe auswerten können und eine im Rundruf enthaltene Kennung extrahieren. Diese Kennung könnte beispielsweise auch die dem schnurlosen Telefon vorgegebene Rufnummer sein. Durch Übermittlung dieser Kennung über einen Funkkanal wird es den schnurlosen Telefonen ermöglicht, die den Basisstationen im Rundruf mitgeteilten Kennungen mit der jeweiligen einem schnurlosen Telefon zugeordneten Kennung zu vergleichen. In bekannter Weise kann nun das schnurlose Telefon, das so einen ihr geltenden Selektivruf erkennt, auf diesen Ruf reagieren und den Rückkanal zur entsprechenden Basisstation belegen.

Gleichzeitig kann das schnurlose Telefon den Fernsprechteilnehmer beispielsweise durch ein Tonrufsignal von dem anliegenden Ruf informieren. Bei Entgegennahme des Rufs durch den Fernsprechteilnehmer, wird in bekannter Weise in der Basisstation das Abnehmen des Telefonhörers eines herkömmlichen Telefons nachgeahmt. Durch das nachgeahmte Abheben des Hörers informiert, schaltet die Vermittlungsanlage einen Sptechverbindungsweg zwischen rufendem Teilnehmer und dem gerufenen Teilnehmer des schnurlosen Telefons durch.

Ein solches Funknetz aus schnurlosen Telefonen bietet den Vorteil, daß eine eigens nur zur Anschaltung und Verwaltung von schnurlosen Telefonen vorgesehene Steuereinrichtung entbehrlich ist. In der vorgesehenen Vermittlungsstelle sind nur relativ geringfügige Änderungen erforderlich, um einen Rundruf zu erzeugen. Bei bekannten Basisstationen sind auch nur relativ geringe Änderungen erforderlich, um sie für den Einsatz in einem solchen Funknetz aus schnurlosen Telefonen auszustatten. Gegenüber herkömmlichen schnurlosen Telefonen sind am schnurlosen Telefon selbst keine Änderungen erforderlich. Sofern nicht noch andere zusätzliche Leistungsmerkmale vorgesehen sind, ist für das schnurlose Telefon kein Unterschied feststellbar, ob es als Einzelgerät an eine Telefonleitung angeschlossen ist, oder ob es über eine Basisstation angeschlossen ist, die im Zusammenwirken mit der Vermittlungsanlage ein Funknetz bildet.

Die Vernetzungsmöglichkeit von schnurlosen Telefonen durch den Rundruf der Vermittlungsanlage bietet aber darüber hinaus den entscheidenden Vorteil, daß die Fernsprechteilnehmer nicht von einer vorgegebenen Netzstruktur abhängig sind. Durch den Rundruf kann die Verwaltung der Fernsprechteilnehmer von schnurlosen Telefonen bezüglich ihres Aufenthaltsortes in einer bestimmten Funkzelle völlig entfallen. Der Vermittlungsanlage muß nicht einmal mitgeteilt werden, an welchen Anschluß eine Basisstation angeschlossen bzw. entfernt wird.

Ohne großen Aufwand kann allein durch Umstecken der Basisstationen das Funknetz vergrößert bzw. die Position der Funkzellen verschoben werden. Eine aufwendige Netzplanung kann entfallen. Im Prinzip kann jeder Fernsprechteilnehmer eines schnurlosen Telefons selbst je nach eigenem Bedarf Basisstationen nur an den Orten aufstellen, an denen er sich gewöhnlicherweise aufhält. Diese Basisstationen sind dann aber in der Lage, allen Fernsprechteilnehmern von schnurlosen Telefonen zur Verfügung zu stehen. Sollte sich im praktischen Betrieb herausstellen, daß der Aufenthaltsort eines Fernsprechteilnehmers in einem Funkschatten liegt, bzw. an einem bestimmten Aufenthaltsort eine so hohe Gesprächsdichte herrscht, daß die Anzahl der verfügbaren Funkkanäle, die in der Regel der Anzahl der Basisstationen in diesem Funkbereich entspricht, nicht ausreichend ist, so kann einfach durch Anschluß einer Basisstation an einem in der Nähe befindlichen Telefonanschluß so das Funknetz entsprechend ausgebaut werden.

Eine Vermittlungsanlage, die zum Aufbau eines aus schnurlosen Telefonen gebildeten Funknetz geeignet ist, kann hierzu in ihrem Rufnummernplan die Aufnahme eines Merkmals "schnurloses Telefon" und einer einem schnurlosen Telefon zuordnenbaren Kennung vorsehen. Hierdurch kann sie bei einem Gesprächswunsch mit einem Fernsprechteilnehmer feststellen, ob dieser Teilnehmer wie ein gewöhnlicher Teilnehmer zu behandeln ist oder ob bei einem mit dem Merkmal "schnurloses Telefon" belegtem Teilnehmer ein Rundruf auszusenden ist. Prinzipiell läßt sich ein solches Funknetz mit jeder Vermittlungsanlage verwirklichen, bei der Mittel vorgesehen sind, um mit den Endgeräten von Fernsprechteilnehmern Daten auszutauschen ohne eine Sprechverbindung herzustellen.

Eine besonders einfache Realisierung ergibt sich bei ISDN-Telekommunikatiönsanlagen mit ISDN-Schnittstellen auf der Teilnehmerseite. Hier ist nämlich neben zwei digitalisierten Sprechkanälen (B-Kanäle) auch ein Datenkanal (D-Kanal) vorgesehen, der unabhängig vom Sprechkanal genutzt werden kann. Bei einer solchen Vermittlungsanlage kann daher nur durch Änderung der Betriebssteuerung der Vermittlungsanlage ein Rundruf über alle D-Kanäle ausgesendet werden, ohne daß hierzu schaltungstechnische Änderungen der Vermittlungsanlage erforderlich sind. Dies hat den großen Vorteil, daß allein durch Modifizierung des Betriebsprogrammes eine solche Vermittlungsanlage für ein aus schnurlosen Telefonen gebildetes Funknetz vorgesehen werden kann.

Lediglich die Basisstationen der schnurlosen Telefone sind hierzu mit ISDN-Schnittstellen zu versehen, welche mit bereits dafür vorgesehenen integrierten Bausteinen ohne großen Aufwand realisiert werden können. Dadurch verringert sich auch der Aufwand zur Auswertung eines im D-Kanal übertragenen Rundrufes. Darüberhinaus werden keine gesonderten Steuereinrichtungen und speziell dafür vorgesehene Anschlußeinrichtungen für schnurlose Telefone benötigt.

Die Erfindung wird nun anhand eines in den Figuren dargestellten Ausführungsbeispiels näher beschrieben und erläutert.

Es zeigen:
- Figur 1: ein aus schnurlosen Telefonen gebildetes Funknetz,
- Figur 2: den Rufnummernplan einer Vermittlungsanlage für ein aus schnurlosen Telefonen gebildetes Funknetz.

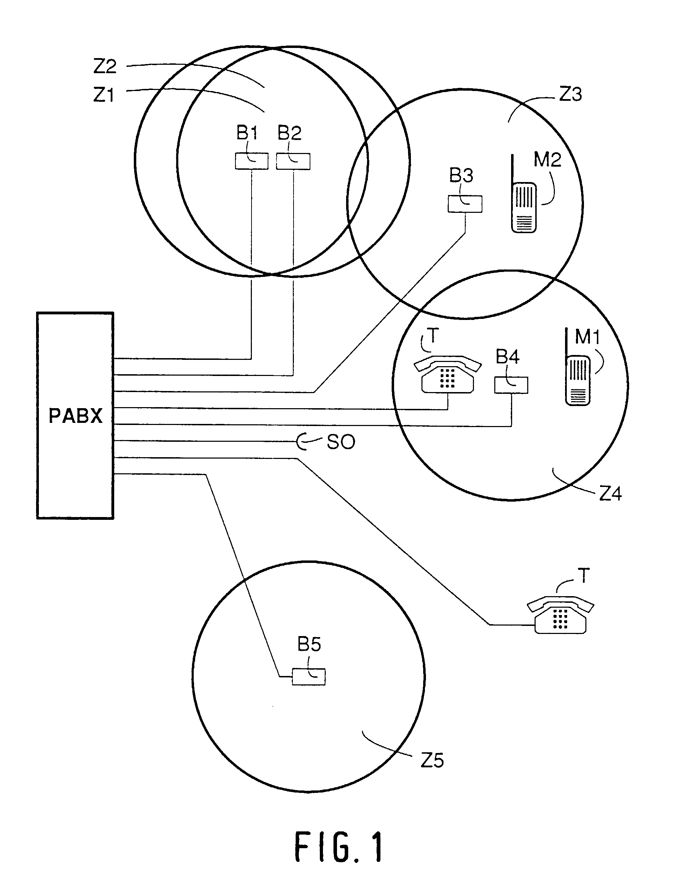

Die Figur 1 zeigt in schematischer Darstellung eine ISDN-Nebenstellenvermittlungsanlage PABX, an der sowohl herkömmliche Telefonapparate T als auch Basisstationen B1...B5 schnurloser Telefone M1, M2 angeschlossen sind. Die Basisstationen B1...B5 der schnurlosen Telefone können an jeder beliebigen Anschlußleitung, die zu der Nebenstellenanlage PABX führt, angeschlossen werden. Für die Nebenstellenanlage PABX verhält sich eine Basisstation B eines schnurlosen Telefons genauso wie ein gewöhnlicher Telefonapparat T. Je nach Anzahl und Standort der Basisstationen kann durch die räumliche Verteilung der Basisstationen ein flächendeckendes Funknetz Z1..Z4 geschaffen werden. Auf der anderen Seite ist es auch möglich, voneinander isolierte Funkzellen Z5 zu schaffen, die beispielsweise einem schwerpunktmäßigen Aufenthaltsort der Fernsprechteilnehmer entsprechen. Die Anzahl der Basisstationen und die räumliche Verteilung hängt dabei von der Größe der zu versorgenden Fläche, der Verkehrsdichte und der Funkausbreitungsbedingungen ab.

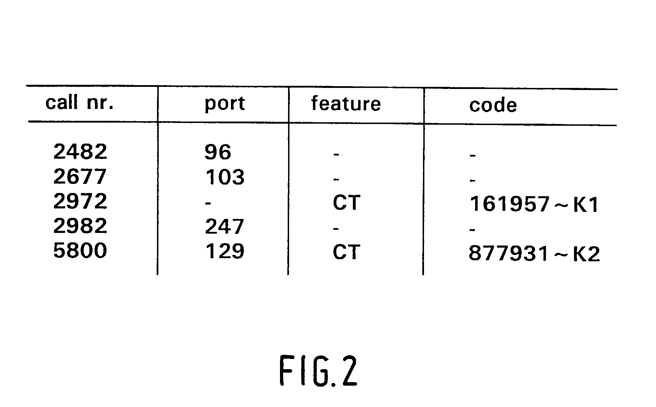

In Figur 2 ist der Rufnummernplan der ISDN-Nebenstellenvermittlungsanlage PABX dargestellt. In der ersten Spalte sind die Rufnummern der an der Nebenstellenanlage angeschlossenen Teilnehmer aufgelistet. Diesen Rufnummern ist in der zweiten Spalte ein Port zugeordnet, der die physikalische Adresse eines ISDN-Anschlusses darstellt, an den der jeweils mit seiner Rufnummer anwählbare Fernsprechteilnehmer angeschlossen ist. Wenn nun ein Fernsprechteilnehmer, beispielsweise der Teilnehmer mit der Rufnummer 2482 die Nummer des Teilnehmers 2982 ruft, so wird das Betriebssystem der ISDN-Nebenstellenvermittlungsanlage PABX anhand des Rufnummernplans über den Datenkanal des Ports 247 ein Rufsignal senden. Nimmt der Fernsprechteilnehmer mit der Rufnummer 2982 seinen Handapparat ab, so wird dies der Vermittlungsanlage PABX über den D-Kanal signalisiert und das Betriebssystem der Vermittlungsanlage PABX schaltet einen Sprechweg zwischen den Ports 96 und 247.

Des weiteren ist im Rufnummernplan eine dritte Spalte zur Aufnahme eines Merkmals vorgesehen. Fernsprechteilnehmer, die über ein schnurloses Telefon erreichbar sind, erhalten hier den Eintrag CT (=cordless telephone). Eine vierte Spalte "Kennung" ist dafür vorgesehen, für jedes angemeldete schnurlose Telefon dessen Kennung K1, K2 aufzunehmen. Im Ausführungsbeispiel entspricht diese Kennung genau der Kennung, die schnurlose Telefone und Basisstation gewöhnlicherweise austauschen, um das Mitbenutzen eines bereits durch ein schnurloses Telefon benutzten Funkkanals zu verhindern. Der Gebrauch solcher Kennungen zur Belegung eines Funkkanals ist dem Fachmann beispielsweise aus der DE OS 39 18 696.2 bekannt. Im Ausführungsbeispiel werden schnurlose Telefone verwendet, deren Kennung bei der Produktion jeweils nur einmal vergeben wird und im schnurlosen Telefon in einem Festwertspeicher abgelegt ist. Dies bietet eine größtmögliche Sicherheit dafür, daß bei Anschluß eines beliebigen schnurlosen Telefons die Kennung dieses schnurlosen Telefons nur ein einziges Mal im gesamten Funknetz vorkommt. Bei dem Eintrag des Merkmals CT im Rufnummernplan muß diese Kennung durch die betreuende Serviceperson in der Spalte "Kennung" eingegeben werden. In einer bevorzugten Ausführungsform kann diese Kennung jedoch auch durch entsprechende Eingaben am schnurlosen Telefon vom schnurlosen Telefon aus an die Vermittlungsstelle übermittelt werden und so ein bei menschlichen Handlungen nicht ausschließbarer Übertragungsfehler vermieden werden.

Ist ein Fernsprechteilnehmer nur über sein schnurloses Telefon erreichbar, so enthält die Spalte "Port" im Rufnummernplan keinen Eintrag. Ist der Teilnehmer hingegen auch über ein an einen bestimmten Port angeschlossenes herkömmliches Telefon erreichbar, so kann zusätzlich noch die Portnummer dieses Telefons eingetragen sein.

Es kann natürlich auch vorgesehen werden, die Basisstationen im Rufnummernplan mit einem Merkmal "Basisstation" zu versehen und einen Ruf nur an diese Basisstationen auszusenden. Der Ausbau des Funknetzes kann dann aber nur durch gleichzeitige Änderung des Rufnummernplans erfolgen.

Im folgenden wird nun der Ablauf beim Ruf des Teilnehmers 2972, der nur über sein schnurloses Telefon erreichbar ist, näher beschrieben und erläutert. In der entsprechenden Zeile des Teilnehmer 2972 ist das Merkmal CT für schnurloses Telefon eingetragen. Aufgrund dieses Merkmals erzeugt das Betriebssystem der Vermittlungsanlage PABX eine Meldung, die an alle aktiven Ports der Vermittlungsanlage über deren D-Kanal als sogenannte "Broadcast-Meldung" ausgegeben wird. Diese Meldung wird im folgenden aufgrund ihrer Funktion als Rundruf-Meldung bezeichnet. Sie enthält neben einem Befehlscodewort, der diese Meldung als Rundruf-Meldung kennzeichnet, auch noch die Kennung K1 des zu rufenden schnurlosen Telefons M1.

Die Rundruf-Meldung wird wie alle noch zu beschreibenden Meldungen durch eine in das Betriebssystem der Vermittlungsanlage eingreifende Protokollerweiterung realisiert.

Im Ausführungsbeispiel wird von der im genormten DKZE-Protokoll für Befehlserweiterungen vorgesehenen Codeseite 7 Gebrauch gemacht, die einen gezielten Ausstieg in firmenspezifische Protokolle erlaubt und so eine Fremdverträglichkeit mit Endgeräten anderer Firmen beibehält. Es ist dem Belieben des Fachmannes auf dem Gebiet des ISDN-Vermittlungsbaus freigestellt, welche vom DKZE-Protokoll vorgesehenen Meldungen, wie beispielsweise "Register Indications Message", "Facility Register Message" etc., er für die benötigten Meldungen verwendet.

Alle Basisstationen, die nicht gerade ein Gespräch mit einem schnurlosen Telefon abwickeln, erkennen aufgrund des der Rundruf-Meldung eigenen Befehlscodewortes, die Rundruf-Meldung und entnehmen der Rundruf-Meldung die in ihr enthaltene Kennung K1. Alle angesprochenen Basisstationen suchen in bekannter Weise einen nicht belegten Funkkanal und senden auf diesem Funkkanal anstelle einer in der Basisstation abgelegten Kennung die aus der Rundruf-Meldung übernommene Kennung K1 aus.

Alle schnurlosen Telefone M1, M2, die nicht gerade ein Gespräch führen, suchen periodisch die Funkkanäle ab, um einen ankommenden Ruf zu erkennen. Das schnurlose Telefon M2, das sich in der Funkzelle Z3 befindet, rastet auf dem Funkkanal, den die Basisstation B3 zur Aussendung der Kennung belegt hat, auf. Durch Auswertung der von der Basisstation B3 ausgesandten Kennung K1 erkennt das schnurlose Telefon M2, daß diese Kennung K1 nicht der im Festwertspeicher des schnurlosen Telefons M2 gespeicherten Kennung K2 entspricht. Daraufhin setzt das schnurlose Telefon M2 seinen Suchlauf fort.

Das schnurlose Telefon M1 in der Funkzelle Z4 hingegen stellt eine Übereinstimmung der beiden Kennungen fest und sendet daraufhin im Rückkanal ein Quittungssignal. Aufgrund dieses Quittungssignals erzeugt die Basisstation B4 eine Bestätigungs-Meldung, die über den D-Kanal an die zentrale Steuerung der Vermittlungsanlage PABX geschickt wird. Beim Rücklauf der Bestätigungs-Meldung werden durch periphere Steuerungen der Vermittlungsanlage der Bestätigungs-Meldung die Nummer des Ports zugeordnet, über den die Bestätigungs-Meldung zurückläuft. Sobald die Bestätigungs-Meldung an der Vermittlungsanlage PABX eintrifft, wird das Aussenden des Rundrufs durch Aussenden einer weiteren speziell dafür vorgesehenen Broadcast-Meldung "Rundrufende" gestoppt, da der Aufenthaltsbereich des gerufenen schnurlosen Telefons nun bekannt ist. Das Rufsignal wird nur noch über den Port der Basisstation B4 ausgesendet.

Sobald der gerufene Teilnehmer das Gespräch beispielsweise durch betätigen einer Rufannahmetaste am schnurlosen Telefon M1 annimmt, wird ein Gabelumschaltsignal zur Basisstation B4 gesendet. Die Basisstation B4 erzeugt eine Setup-Meldung, die über den D-Kanal zur Vermittlungsstelle PABX gesendet wird. Aufgrund dieser Meldung schaltet die Vermittlungsstelle PABX den Sprechweg zwischen dem rufenden Teilnehmer und der Basisstation B4 durch. Von nun an verhält sich die Basisstation B4 wie eine Basisstation eines gewöhnlichen schnurlosen Telefons und ermöglicht so eine Sprechverbindung zwischen rufendem und gerufenem Teilnehmer.

## Patentansprüche

1. Aus schnurlosen Telefonen gebildetes Funknetz, bei dem Basisstationen schnurloser Telefone zum Anschluß an eine Vermittlungsanlage (PABX) vorgesehen sind, dadurch gekennzeichnet,
- daß im Rufnummernplan der Vermittlungsanlage (PABX) die Aufnahme eines Merkmals "schnurloses Telefon" (CT) und einer, einem schnurlosen Telefon (M1) zuordenbaren Kennung (K1) vorgesehen ist, und daß die Vermittlungsanlage dazu vorgesehen ist, beim Rufen eines Teilnehmers mit dem Merkmal "schnurloses Telefon", die diesem Teilnehmer im Rufnummernplan zugeordnete Kennung (K1) an eine Vielzahl von Teilnehmern (Rundruf) auszusenden
- daß die Basisstation (B1) mit einer Schnittstelle versehen ist, die dazu vorgesehen ist, bei bestimmten, leitungsseitig ankommenden Rufsignalen eine darin enthaltene Kennung zu entnehmen und für den Kennungsaustausch zwischen der Basisstation und dem schnurlosen Telefon (M1) zu verwenden.

2. Vermittlungsanlage mit einem Rufnummernplan,
dadurch gekennzeichnet,
daß im Rufnummernplan der Vermittlungsanlage (PABX) die Aufnahme eines Merkmals "schnurloses Telefon" (CT) und einer, einem schnurlosen Telefon (M1) zuordenbaren Kennung (K1) vorgesehen ist, und daß die Vermittlungsanlage dazu vorgesehen ist, beim Rufen eines Teilnehmers mit dem Merkmal "schnurloses Telefon", die diesem Teilnehmer im Rufnummernplan zugeordnete Kennung (K1) an eine Vieizahl von Teilnehmern (Rundruf) auszusenden.

3. Vermittlungsanlage nach Anspruch 2,
dadurch gekennzeichnet,
daß die Vermittlungsanlage (PABX) eine ISDN-Telekommunikationsanlage mit ISDN-Schnittstellen auf der Teilnehmerseite ist.

4. Basisstation (B1) für ein schnurloses Telefon, wobei zur Kanalbelegung eines Funkkanals zwischen Basisstation und Handteil des schnurlosen Telefons (M1) ein Kennungsaustausch vorgesehen ist,
dadurch gekennzeichnet,
daß die Basisstation (B1) mit einer Schnittstelle versehen ist, die dazu vorgesehen ist, bei bestimmten, leitungsseitig ankommenden Rufsignalen eine darin enthaltene Kennung zu entnehmen und für den Kennungsaustausch zwischen der Basisstation und dem schnurlosen Telefons (M1) zu verwenden.

5. Basisstation (B1) für ein schnurloses Telefon nach Anspruch 4,
dadurch gekennzeichnet,
daß die Schnittstelle eine ISDN-Schnittstelle ist.

## Claims

1. A radio network comprising one cordless telephones, in which base stations of cordless telephones are provided for connection to an exchange (PABX), characterized
- in that a "cordless telephone" (CT) feature and a code (K1) that can be assigned to a cordless telephone (M1) are included in the call number schedule (Fig. 2) of the switching center (PABX) and in that the switching center, when a subscriber having the "cordless telephone" feature is calling, transmits the code (K1) assigned to this subscriber in the call number schedule to a plurality of subscribers (broadcast call) and
- in that the base station (B1) includes an interface used for taking over a code contained in certain call signals coming in by a line and using it for the exchange of the code between the base station and the cordless telephone (M1).

2. An exchange comprising a call number schedule, characterized in that the call number schedule (Fig. 2) of the exchange (PABX) comprises a "cordless telephone" (CT) feature and a code (K1) which can be assigned to a cordless telephone (M1) and in that, when a subscriber having the "cordless telephone" feature calls, transmits the code (K1) assigned to this subscriber to a plurality of subscribers (broadcast call).

3. An exchange as claimed in Claim 2, characterized in that the exchange (PABX) is an ISDN telecommunication system with ISDN interfaces on the subscriber side.

4. A base station (B1) for a cordless telephone in which an identification code is exchanged between a base station and a handset of the cordless telephone (M1) to seize a radio channel, characterized in that the base station (B1) includes an interface for taking over a code contained in certain call signals coming in over the line and using this code for the exchange of codes between the base station and the cordless telephone (M1).

5. A base station (B1) for a cordless telephone as claimed in claim 4, characterized in that the interface is an ISDN interface.

## Revendications

1. Réseau radio formé de téléphones sans fil, les stations de base des téléphones sans fil étant prévues pour le raccordement à un central téléphonique,
caractérisé en ce
- que, dans le plan de numéros d'appel (Fig. 2) du central téléphonique, l'enregistrement d'une caractéristique "téléphone sans fil" (CT) et d'un indicatif (K1) susceptible d'être affecté à un téléphone sans fil (M1) est prévu et que le central téléphonique est conçu pour que, lorsqu'un abonné avec la caractéristique "téléphone sans fil" appelle, l'indicatif (K1) attribué à cet abonné dans le plan de numéros d'appel est diffusé à une pluralité d'abonnés (diffusion);
- que la station de base (B1) est dotée d'une interface prévue pour prélever pour certains signaux d'appel entrants côté ligne un indicatif qu'ils contiennent et pour mettre en oeuvre l'échange d'indicatifs entre la station de base et le téléphone sans fil (M1).

2. Central téléphonique avec un plan de numéros d'appel,
caractérisé en ce
que, dans le plan de numéros d'appel (Fig. 2) du central téléphonique (PABX), l'enregistrement d'une caractéristique "téléphone sans fil" (CT) et d'un indicatif (K1) susceptible d'être attribué à un téléphone sans fil (M1) est prévu et que le central téléphonique est prévu en cas d'appel d'un abonné avec la caractéristique "téléphone sans fil" pour transmettre l'indicatif (K1) attribué à cet abonné dans le plan de numéros d'appel à une pluralité de abonnés (diffusion).

3. Central téléphonique selon la revendication 2,
caractérisé en ce
que le central téléphonique (PABX) est une installation de télécommunication RNIS avec des interfaces RNIS du côté abonné.

4. Station de base (B1) pour un téléphone sans fil, un échange d'indicatifs étant prévu pour l'affectation des canaux d'un canal radio entre la station de base et le combiné du téléphone sans fil (M1),
caractérisée en ce
que la station de base (B1) est dotée d'une interface qui est prévue pour, en cas de certains signaux d'appel entrants côté ligne, prélever un indicatif qu'ils contiennent et la mettre en oeuvre pour l'échange d'indicatifs entre la station de base et le téléphone sans fil (M1).

5. Station de base (B1) pour un téléphone sans fil selon la revendication 4,
caractérisée en ce
que l'interface est une interface RNIS.
